# EUROPÄISCHE PATENTSCHRIFT

(11) **EP 0 673 836 B1**
(45) Veröffentlichungstag und Bekanntmachung des Hinweises auf die Patenterteilung: **27.08.1997**
(21) Anmeldenummer: 95104197.9
(22) Anmeldetag: 22.03.1995
(51) Int. Cl.: B65B 51/16, B65B 51/26

(54) **Vorrichtung zum Schweissen und Schneiden von Filmverpackungen**
Device for welding and severing tubular film bags
Dispositif de soudage et coupage des sachets tubulaires

(30) Priorität: 24.03.1994 IT MI940560
(43) Veröffentlichungstag der Anmeldung: 27.09.1995
(73) Patentinhaber: RECORD S.P.A., 22040 Garbagnate Monastero (CO) (IT)
(72) Erfinder: Fioravanti, Giuseppe, I-22040 Bosisio Parini (IT); Ferrari, Alessandro, I-22063 Cantù (IT); Pozzini, Elio, I-20151 Milano (IT)
(74) Vertreter: Mayer, Hans Benno, Dipl.-Ing.

(56) Entgegenhaltungen:
- US-A- 3 218 218
- US-A- 4 903 460

## Beschreibung

Die vorstehende Erfindung betrifft eine Vorrichtung zum Schweissen und Schneiden eines Verpackungsfilmes.

Es sind auf dem Markt unterschiedliche Verpackungsmaschinen bekannt geworden, die für den Verpackungsvorgang Flowrapp- oder Flowpack-Verfahren einsetzen, und dabei die zu verpackenden Erzeugnisse in einen dünnen Verpackungsfilm einhüllen. Der die Erzeugnisse umhüllende Verpackungsfilm wird in Längsrichtung in bekannter Weise durch ein Verschweissen der zusammengefügten Ränder des Filmes verschlossen. Zusammen mit den umhüllten Erzeugnissen wird die Verpackungshülle dann über eine horizontale Ebene in Richtung einer Vorrichtung gefördert, die zum Verschweissen und Schneiden der Verpackungshülle in Querrichtung dient.

Bekannte Schweisseinrichtungen dieser Art bestehen im wesentlichen aus zwei horizontal angeordneten Wellen. Jede Welle ist mit einer oder mit mehreren radial in entgegengesetzte Richtungen abstehenden Platten ausgerüstet. Diese Platten tragen Einrichtungen zum Schweissen sowie zum Schneiden des Verpackungsfilmes. Im Anschluss wird auf eine doppelte Anordnung solcher Platten Bezug genommen; es ist aber naheliegend, dass die erfindungsgemäss ausgebildete Vorrichtung auch eine grössere Anzahl dieser radial abstehenden Platten aufweisen kann.

Das Verschweissen sowie das Querschneiden der Verpackungshülle erfolgt stets dann, wenn die freien Enden der plattenartigen Gebilde während der Drehbewegung der Aufnahmewellen und in Übereinstimmung mit der zu verschweissenden und zu trennenden Verpackungshülle in Berührung treten.

Je nach dem zu verpackenden Erzeugnis werden Verpackungshüllen mit unterschiedlichen technischen Merkmalen für das Filmmaterial verwendet. So ändert sich z. B. von Fall zu Fall die erforderliche Temperatur zum Verschweissen des Filmes, die Abmessung des Verpackungsfilmes, und die Reissfestigkeit des Filmes variiert. Ferner ändert sich die Dicke des eingesetzten Filmmateriales, das zwischen 20 und 100 µ schwanken kann. Schliesslich ist auch die Heiztemperatur zur Durchführung des Schweissvorganges einzustellen, Temperatur, die zwischen Werten von 50° bis 250° C schwanken kann. Die einzustellende Schweisstemperatur ändert sich in Abhängigkeit von der Berührungsdauer zwischen den plattenförmigen Einrichtungen und dem Verpackungsfilm, Berührungsdauer, die von der Vorschubgeschwindigkeit des Hüllmateriales abhängig ist.

Um einwandfreie Verpackungshüllen herstellen zu können und Ausschussverpackungen auf ein Minimum zu beschränken, ist es erforderlich, dass die drehbar gelagerten Wellen sowie die plattenförmigen Einrichtungen zum Verschweissen und zum Schneiden des filmartigen Hüllmateriales einwandfrei parallel zueinander angeordnet sind, und dies auch bei unvermeidlichen Wärmedehnungen, die aufgrund unterschiedlicher Schweisstemperaturen eintreten.

Ferner ist zwischen den Platten zum Schweissen und Querschneiden des Verpackungsfilmes ein sehr genauer Durchgang einzuhalten, dessen Höhe von der Art des eingesetzten Verpackungsfilmes, der Dicke des Verpackungsfilmes und der Wärmedehnungen der einzelnen Bauteile abhängig ist. Die Einstellung des Durchlaufschlitzes ist auch vom Schneidvorgang zwischen Messer und Gegenmesser der rotierenden Schweissplatten abhängig.

Bei den bekannten Verpackungsmaschinen der genannten Art war es bisher unumgänglich, aufwendige Einstellvorgänge von Hand und in Abhängigkeit vom verwendeten Filmmaterial durchzuführen. Die Einstellvorgänge waren vor Beginn des Verpackungsvorganges durchzuführen und dies geschah durch genaues Einrichten und Einstellen der Enden der sich drehenden Wellen, die mit den plattenförmigen Einrichtungen zum Verschweissen und zum Trennen des Verpackungsfilmes ausgerüstet waren.

Ferner war es bei bekannten Maschinen immer notwendig, aufwendige Einstellvorrichtungen von Hand, durch Einwirken auf Stellschrauben und Federn vorzunehmen, um somit den gewünschten Abstand und Anpressdruck zwischen den Schweissplatten einzustellen, dies um ein allzu betontes Eindringen der Plattenenden in das Filmmaterial während des Schweissvorganges in Querrichtung der Verpackungshülle zu vermeiden.

Es ist naheliegend, dass diese feinfühlig und genau durchzuführenden Einstellvorgänge des gegenseitigen Abstandes zwischen den Schweiss- und Schneidplatten sowie das Einstellen des Arbeitsdruckes der Schweisseinrichtungen und Trennmesser wesentlich sind für das gute Arbeiten der Maschine, die für eine kontinuierliche Massenproduktion eingesetzt wird.

Für die bekannten Maschinen der genannten Art waren die Einstellvorgänge von einem Fachmann jedesmal dann durchzuführen, wenn der Verpackungsvorgang einen anderen Verpackungsfilm erforderlich machte oder dann, wenn die Fertigungsgeschwindigkeit zu ändern war, was ein Einstellen der Temperatur an den sich drehenden Schweissplatten erforderlich machte.

Ferner war es notwendig, von Hand den gegenseitigen Abstand zwischen den freien Enden der Schweiss- und Schneideplatten einzustellen, dieser Vorgang machte es unumgänglich, zahlreiche Schweissversuche zu fahren, was zu langen Stillstandszeiten der Maschine führte.

Es ist noch darauf hinzuweisen, dass in den bekannten Verpackungsmaschinen, aufgrund baulicher Gegebenheiten und bestehender Sicherheitsvorschriften, alle Einstellvorgänge bei stehender Maschine durchzuführen waren. Die führte zu einer bemerkenswerten Verminderung des Wirkungsgrades der gesamten Verpackungsanlage.

Aufgabe der vorstehenden Erfindung ist es, die Nachteile des Standes des Technik zu vermeiden und eine Vorrichtung zum Verschweissen und zum Trennen von Verpackungshüllen der genannten Art zu schaffen, die es ermöglicht, die Schweissparameter und Merkmale des Schneidevorganges einzustellen und eine deutliche Anzeige der eingestellten Werte zu ermöglichen, und es ferner zuzulassen, sämtliche Einstellvorgänge an der Schweiss- und Schneidevorrichtung sofort im Bedarfsfalle und bei arbeitender Anlage, das heisst bei sich drehender Schweiss- und Schneidevorrichtung durchzuführen.

Die erfindungsgemässe Aufgabe wird mit einer Schweiss- und Schneidevorrichtung für Filmverpackungen durch Vorsehen von zwei sich drehenden Wellen erreicht, wobei jede Welle mit radial abstehenden plattenförmigen Bauteilen ausgerüstet, die an ihren freien Enden Schweissmittel und Schneidemesser für den Film aufweisen, wobei jedes Ende der Welle, die mit plattenförmigen Schweiss- und Schneideinrichtungen versehen ist, vom Arm eines Winkelhebels aufgenommen sind, dass der Winkelhebel an einem Zapfen, der mit dem Maschinengestell verbunden ist, schwenkbar gelagert ist und dass mit dem Ende des verbleibenden Armes eines jeden Kniehebels steuerbare Einstelleinrichtungen sowie eine Gegendruckvorrichtung wirkverbunden sind.

Somit wird es durch gesteuertes Verschwenken der Winkelhebel möglich, die Schweisskanten oder Schneiden der sich drehenden plattenförmigen Einrichtungen gegenseitig zu nähern oder auf grösseren Abstand zu bringen, dies ermöglicht ein genaues Anpassen der Schweiss- und Schneidevorrichtung an die Dicke des zu schweissenden Materiales.

Der Erfindungsgegenstand wird nun genauer anhand eines Ausführungsbeispieles beschrieben und in den beigefügten Zeichnungen dargestellt. Es zeigen:
Fig. 1 schematisch in perspektivischer Darstellung eine Verpackungsanlage, die mit einer Schweisseinrichtung für die einzelnen Verpackungen ausgerüstet ist;
Fig. 2a schematisch zwei Schweiss- und Schneideplatten in sich gegenüberliegender Stellung,
Fig. 2b schematisch im Querschnitt die Enden von zwei geschweissten und in Querrichtung geschnittenen Verpackungsenden;
Fig. 3 die Steuereinrichtung der Schweissvorrichtung;
Fig. 4 schematisch und in perspektivischer Darstellung die wesentlichen Bauteile der Schweiss- und Schneidevorrichtung;
Fig. 5 in perspektivischer Darstellung die wesentlichen Bauteile zum Einstellen der Schweiss- und Schneideeinrichtung;
Fig. 6a, 6b, 6c in Seitenansicht den Kniehebel sowie die Schweiss- und Schneidplatten in unterschiedlichen Arbeitsstellungen.

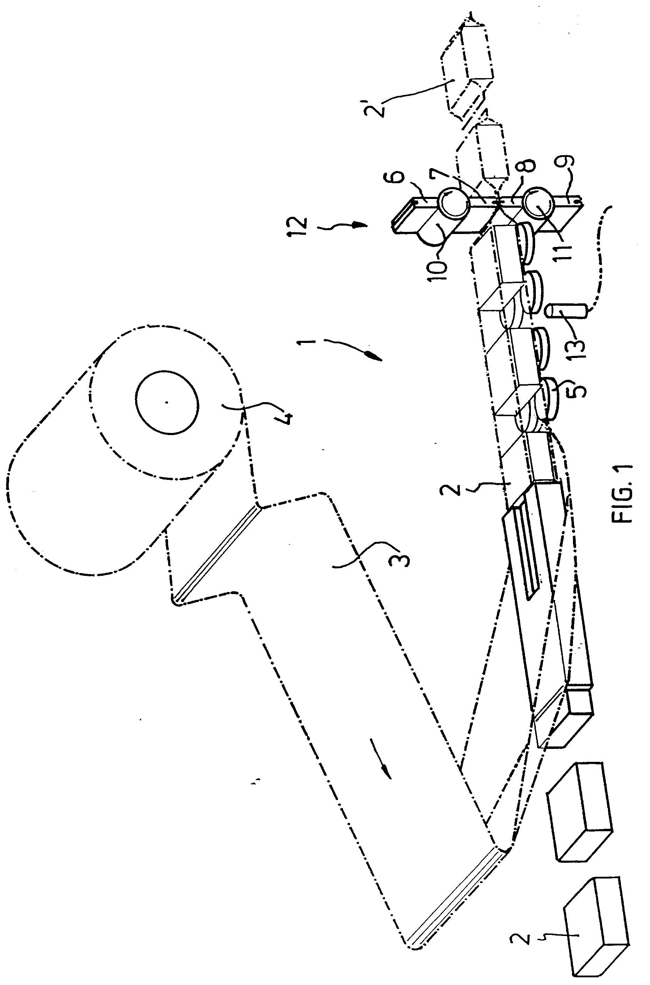

Wie der Fig. 1 zu entnehmen ist, werden in der gesamthaft mit 1 gekennzeichneten Verpackungsanlage die zu umhüllenden Erzeugnisse 2 über ein horizontal angeordnetes Förderband (nicht dargestellt) angefördert. Mit einem Film 3, der von einer Vorratsrolle 4 abgezogen wird, werden die Erzeugnisse 2 umhüllt und die sich gegenüberliegenden Längsränder des Filmes 3 werden in Längsrichtung verschweisst. Zu diesem Zwecke werden Schweissrollen 5 eingesetzt, die in einer unteren Ebene angeordnet sind.

Unter Zuhilfenahme von plattenförmigen Schweiss- und Schneideeinrichtungen, die mit 6, 7; 8, 9 gekennzeichnet sind und sich in Querrichtung erstrecken und von sich drehenden Wellen 10 und 11 gesteuert angetrieben sind, erfolgt ein Verschweissen der Filmhülle 3, die das zu verpackende Erzeugnis 2 umhüllt. Nach Durchführen des Schweissvorganges wird die Filmhülle in Querrichtung durchtrennt, wie dies mit Strichpunktlinien 2' in Fig. 1 dargestellt ist.

Auf der Höhe der Schweisseinrichtung 5 zum Erzeugen der Längsverschweissung und vor der weiteren Schweisseinrichtung, die gesamthaft mit 12 gekennzeichnet ist, ist ein Sensor 13 angeordnet, der noch genauer im Anschluss beschrieben werden wird.

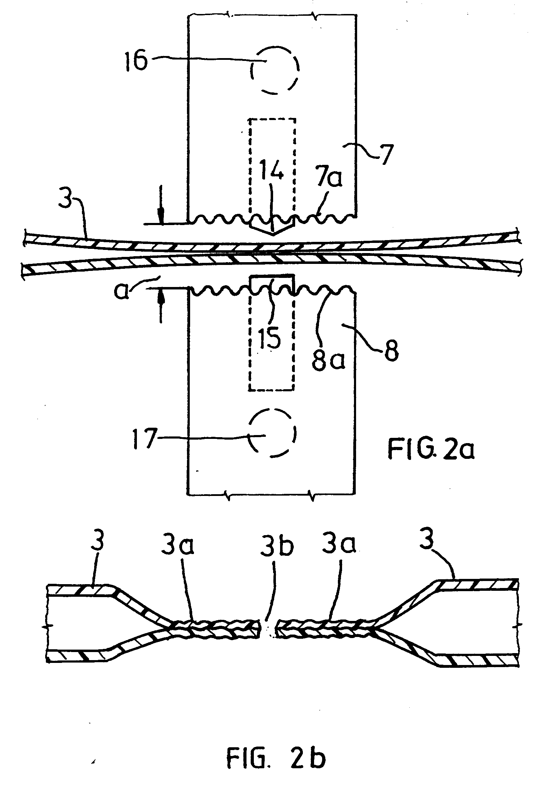

In Fig. 2a sind zwei plattenförmige Einrichtungen 7, 8 zum Verschweissen und zum Schneiden während der Durchführung des Schweiss- und Schneidevorganges der Filmhülle 3, die das zu verpackende Erzeugnis 2 umhüllt, dargestellt.

In Fig. 2a ist der gegenseitige Abstand zwischen den Enden der plattenförmigen Einrichtungen 7 und 8 übertrieben gross dargestellt. In Wirklichkeit erfolgt während des Schweiss- und Schneidevorganges ein gegenseitiges Berühren, der Plattenenden 7 und 8.

Um eine einwandfreie Verschweissung sowie einen einwandfreien Schnitt der Filmhülle in Querrichtung unter Zuhilfenahme der Schneiden 14 und 15 zu erzielen, ist es unbedingt erforderlich, dass der Abstand (a) mit grösstmöglicher Genauigkeit im Bereich von 1/1000 mm und in Abhängigkeit von der Dicke sowie dem Aufbau der Filmhülle 3 sowie in Abhängigkeit von der Vorschubgeschwindigkeit des Verpackungsfilmes 3 einstellbar ist.

Die glatten oder gewellt ausgebildeten Flächen 7a, 8a der Platten 7 und 8 zum Schweissen und Schneiden der Filmhülle werden, z. B. unter Zuhilfenahmen von Glühkerzen oder Heizdrähten 16 oder 17 erwärmt, diese sind elektrisch aufheizbar und über ein einstellbares Thermostat mit einer Stromquelle verbunden.

In Fig. 2b ist im Schnitt die Schweisszone der Filmhülle 3 dargestellt, durch die Schweisseinrichtung können Querränder 3a verschweisst und ein anschliessender Schnitt 3b in Querrichtung durchgeführt werden.

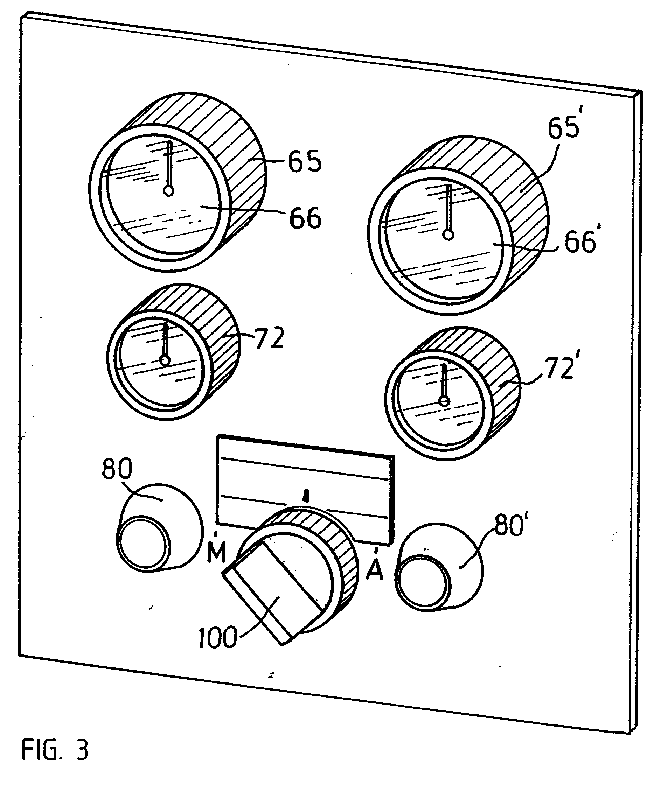

Fig. 3 zeigt schematisch in perspektivischer Darstellung die Steuertafel der Schweisseinrichtung, die im Anschluss noch genauer beschrieben werden wird.

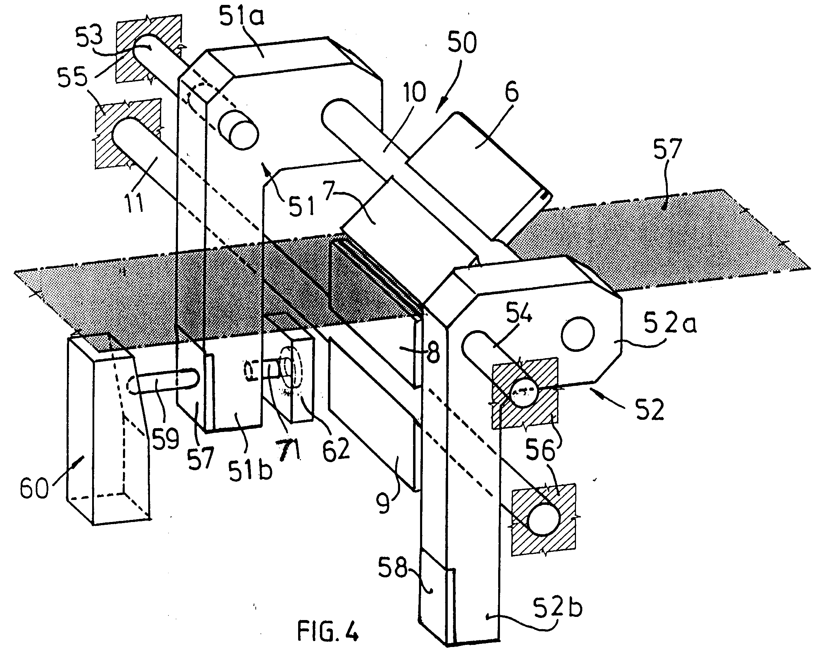

Der Fig. 4 kann in perspektivischer Darstellung eine Ausführungsform der Schweiss- und Schneidevorrichtung die gesamthaft mit 50 gekennzeichnet ist, entnommen werden.

Die Vorrichtung besteht aus zwei Winkelhebeln 51 und 52.

Der Winkelhebel 51 ist über einen Zapfen 53 und der Winkelhebel 52 über einen Zapfen 54 schwenkbar gelagert. Die Zapfen 53 und 54 sind mit den Seitenteilen 55 und 56 der gesamthaft mit 50 gekennzeichneten Vorrichtung verbunden.

Die kürzeren Arme 51a und 52a der Winkelhebel 51, 52 nehmen drehbar die Welle 10 auf, von der radial und in entgegengesetzten Richtungen zwei oder mehrere plattenförmige Einrichtungen zum Schweissen und zum Schneiden der Filmhülle angeordnet sind.

Unter der Welle 10 ist drehbar, aber ortsfest mit den Wänden 55 und 56 der Maschine die Welle 11 verbunden, die mit Schweissplatten 8 und 9 ausgerüstet ist.

Es ist darauf hinzuweisen, dass in Wirklichkeit die Wellen 10 und 11 in einer einzigen vertikalen gemeinsamen Ebene angeordnet sind. Lediglich in Fig. 4 ist aus Gründen der zeichnerischen Darstellung die Welle 11, die die Schweiss- und Schneidplatten 8, 9 aufnimmt, gegenüber der Welle 10, die die Schweiss- und Schneideplatten 6 und 7 aufnimmt, versetzt.

In einer Ebene 57, die in Fig. 4 schematisch mit Strichpunktlinien dargestellt ist, werden die vom Verpackungsfilm 3 umhüllten Erzeugnisse 2 gefördert. Die Filmhülle 3 ist, unter Zuhilfenahme der Platten 7, 8 bzw. 6, 9, in Querrichtung zu verschweissen und zu schneiden.

Dies erfolgt dann wenn die freien Enden der Platten 7, 8; 6, 9 während der Drehbewegung der Wellen 10 und 11 in Kontakt treten.

Jeder Winkelhebel 51, 52 weist einen Arm 51b bzw. einen Arm 52b auf, diese Arme sind länger ausgebildet und ragen im wesentlichen nach unten. Das freie Ende eines jeden Armes 51b, 52b weist eine Ebene 57 bzw. 58 auf. Mit jeder Ebene steht eine Stange 59 in Wirkverbindung, die gesteuert über eine Einstellvorrichtung, die gesamthaft mit 60 gekennzeichnet ist, antreibbar ist.

In Fig. 4 ist die Vorrichtung mit der dazugehörigen Antriebsstange 59 aus Gründen der Übersichtlichkeit nur für den Arm 51b dargestellt. Eine solche Vorrichtung wirkt auch auf die geneigte Ebene 58 des zweiten Armes 52b ein, der Bestandteil des zweiten Winkelhebels 52 ist. Mit der Fläche des Armes 51b, die der Ebene 57 gegenüberliegt, steht die Stange 71 eines Pneumatikkolbens 62 in Wirkverbindung, der von einer örtlich fest angeordneten Lagerplatte 162 gehalten wird. Die Arbeitsweise und der Zweck des Kolbens 62 wird im Anschluss genauer beschrieben.

Auch die der Ebene 58 des Armes 52b des Winkelhebels 52 gegenüberliegende Fläche arbeitet mit einer Kolbenzylindereinheit zusammen, diese ist in Fig. 4 aus Gründen der Übersichtlichkeit nicht dargestellt worden.

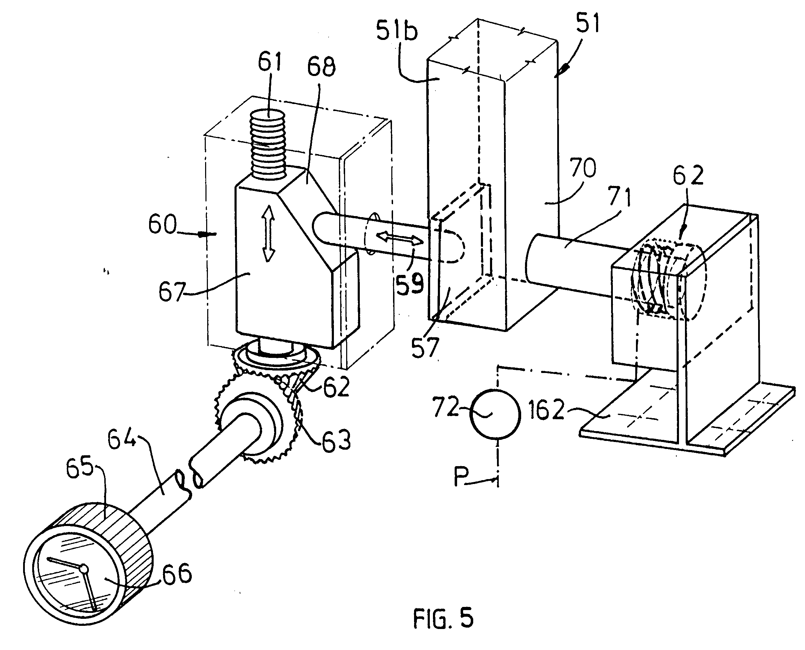

Anhand der Fig. 5 wird im Anschluss die Einstellvorrichtung 60 genauer beschrieben. Die Einstellvorrichtung 60 wird lediglich für den Arm 51b des Winkelhebels 51 beschrieben.

Selbstverständlich ist auch für den Arm 52b des Winkelhebels 52 eine identische Einstellvorrichtung vorgesehen.

Wie der Fig. 5 zu entnehmen ist, wird im Inneren der Einstellvorrichtung 60 drehbar eine Schraube 61 gelagert, die an ihrem unteren Ende mit einem Kegelzahnrad 62 bestückt ist, das mit einem Kegelzahnrad 63 kämmt, das unter Zuhilfenahme einer Antriebswelle 64 (schematisch dargestellt und ohne Übersetzungsgetriebe) mit einem Handrad 65 in Verbindung steht. Das Handrad 65 ist Bestandteil einer Anzeigevorrichtung 66, die mit Zeigern für die Anzeige versehen ist.

Die Schraube 61 wirkt auf einen Steuerkörper 67 ein, der in Inneren der Vorrichtung 60 gelagert ist. Der Steuerkörper 67 ist verschiebbar angeordnet und weist eine geneigte Ebene 68 auf, mit der ein Ende einer Antriebssstange 69 in Wirkverbindung steht. Das andere Ende der Antriebsstange 69 stützt sich an der Fläche 57 des Armes 51b ab. Mit der Fläche 70 des Armes 51b, die der Ebene 57 gegenüberliegt, steht eine Gegendruckvorrichtung in Wirkverbindung. Diese Vorrichtung besteht aus einer Kolbenstange 71 einer Kolben-Zylindereinheit 62, die von einer ortsfest angeordneten Platte 162 getragen wird. Mit dem Teil der Kolben-Zylindereinheit 62, die durch ein unter Druck stehendes Medium P beeinflussbar ist, steht ein Manometer 72 zum Regeln des Anpressdruckes in Wirkverbindung.

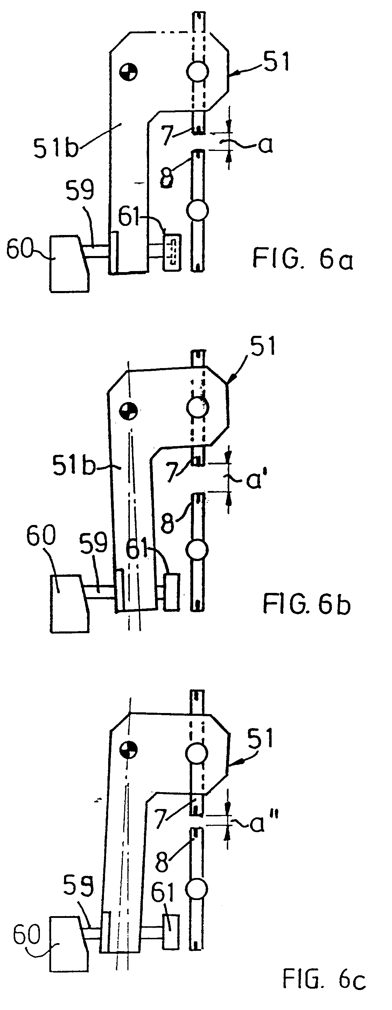

In den Figuren 6a, 6b und 6c ist ein Winkelhebel 51 in verschiedenen Arbeitsstellungen dargestellt. Selbstverständlich gelten die gleichen Bedingungen und Lageanordnungen auch für den Winkelhebel 52.

In Fig. 6a befindet sich die Einstellstange 59 in einer Lage, in der der Arm 51 annähernd in vertikaler Stellung angeordnet ist. Der Abstand zwischen den plattenförmigen Schweisseinrichtungen 7 und 8 entspricht einem Mittelwert, der mit (a) angegeben ist.

Die Kolben-Zylindereinheit 62 wird mit einem Druck beaufschlagt, der eingestellbar ist.

In Fig. 6b ist die Einstellstange 59 um einen grösseren Betrag aus der Vorrichtung 60 ausgefahren, so dass der Arm 51b des Winkelhebels 51 gegen die von der Kolben-Zylindereinheit 62 übertragene Kraft verschwenkt wird, wodurch der Arm in einer nach rechts geneigten Lage zu liegen kommt und sich folglich zwischen den plattenförmigen Schweiss- und Schneideinrichtungen 7 und 8 ein Abstand (a') mit grösserem Ausmass bildet.

In Fig. 6c wurde die Stange 59 nach rückwärts in die Vorrichtung 60 gefahren. Somit, unter der Wirkung der Kolben-Zylindereinheit 62, wird der Winkelhebel 51 nach links verschwenkt, wodurch bei sich gegenüberliegenden plattenförmigen Schweiss- und Schneideeinrichtungen 7 und 8 zwischen diesem ein Zwischenraum (a'') bildet, der als minimaler Abstand anzusehen ist.

Der Fig. 3 kann eine Steuertafel der Maschine entnommen werden. Um den Winkelhebel 21 über die Steuertafel genau einstellen zu können, weist diese einen Drehgriff 65 auf, der eine Anzeigeeinrichtung 66 aufnimmt, z. B. eine Anzeige in Form von Zeigern, welche die genaue Lage des Kniehebels 51 (Fig. 5) anzeigen.

Um mit hoher Genauigkeit den Druck P in der Kolben-Zylindereinheit 62 einstellen zu können, ist ein Manometer 72 vorgesehen, das mit einer Druckregelvorrichtung 80 verbunden ist und mit dem Zylinder 61 wirkverbunden ist.

Die bisher beschriebenen Instrumente werden auch von der Anzeigetafel für das Einstellen des Kniehebels 52 aufgenommen. Diese mit 65', 66' und 72' und 80' gekennzeichneten Teile werden im Anschluss nicht mehr genauer beschrieben, da ihre Arbeitsweise gleich der Arbeitsweise der Anzeigeinstrumente für den Kniehebel 51 ist.

Die in Fig. 3 angezeigte Steuertafel nimmt ferner einen Schalter 100 auf, der es ermöglicht, von einer automatischen Arbeitsweise auf eine von Hand gesteuerte Arbeitsweise der Schweiss- und Schneideeinrichtung umzustellen.

Sofern ein zu verpackendes Erzeugnis unrichtig, d. h. in nicht korrekter Lage gegenüber der Verpackungshülle an die Schweisseinrichtung herangeführt und dort gequetscht wurde, was zu Ausschussverpackungen führt, so wird über bekannte Überwachungseinrichtungen der Verpackungsmaschine ein Anhalten des Verpackungsvorganges eingeleitet. In diesem Fall wird durch den Bedienungsmann der Schalter 100 betätigt, indem dieser in die Stellung "Handbetätigung" gekippt wird. Dies führt zu einem Abblasen des Druckes (P), um die Möglichkeit zu schaffen, die Schweissplatten zu öffnen und die schadhafte Verpackung zu entfernen. Ferner ist es möglich, ein Reinigen der Schweissplatten vorzunehmen, d. h. angeklebtes Filmmaterial zu entfernen.

Im Anschluss an diesen Reinigungsvorgang können die zu verpackenden Erzeugnisse erneut in der gewünschten Reihenfolge zugeführt werden.

Die Erfindung sieht ferner vor, dass der Schalter 100 auch in eine Stellung "automatische Arbeitsweise" gekippt wird.

In diesem Fall wird der in Fig. 1 dargestellte Sensor aktiviert und dieser Sensor gibt Signale ab, die anzeigen, dass das zugeführte Erzeugnis in der richtigen Lage auf dem Transportband angeordnet ist. Sollte dies nicht der Fall sein, bewirken die abgegebenen Steuersignale automatisch ein Entlüften der Kolben-Zylindereinheit 61, was ein Verschieben der Winkelhebel 51, 52, in die in Fig. 6b dargestellte Stellung, und ein Durchlaufen der fehlerhaften Verpackungen ermöglicht, ohne die gesamte Fertigung zur Durchführung des Eingriffes anzuhalten.

Die Arbeitsweise der erfindungsgemässen Vorrichtung ist folgende:

Über den Handgriff 65 wird eine Einstellung des Abstandes (a) zwischen den plattenförmigen Einrichtungen 7, 8 vorgenommen, der Wert dieses Abstandes (a) wird von der Anzeigeeinrichtung (66) aufgezeigt.

Mit der oder den Antriebswellen 64 sowie dem Kegelzahnradpaar 62, 63 wird demzufolge die Schraube 61 betätigt und der Einstellkörper 67 wird nach oben oder nach unten verfahren.

Über die geneigte Ebene 68 wird auf die Stange 59 eingewirkt, die entsprechend der von ihr eingenommenen Stellung ein Verschieben des Armes 51b des Winkelhebels 51 in die Stellungen bewirkt, die den Figuren 6a, 6b, 6b zu entnehmen sind. Dadurch besteht die Möglichkeit, den Abstand (a) zwischen den plattenförmigen Schweiss- und Schneideeinrichtungen 7, 8 zu verändern. Somit erfolgt ein gesteuertes Anpassen des Abstandes (a, a', a'') zwischen den Platten 7, 8 an die für den Schweissvorgang und den Schneidevorgang der durchlaufenden Filmhülle erforderlich ist.

Um die Winkelhebel 51 nicht als starre Maschinenbauelemente auszubilden, ist vorgesehen, dass die Fläche des Armes 51b, die der Fläche 57 gegenüberliegt und an der die Stange 59 anliegt, mit einer Stange 71 einer Kolben-Zylindereinheit 62 in Wirkverbindung steht. Diese Kolben-Zylindereinheit 61 wird in vorteilhafter Weise mit Druckluft beaufschlagt. Dem Zylinder 61 ist ein Manometer 72 und ferner eine Druckregeleinrichtung 80 zugeordnet, die es ermöglicht, die Reaktionskraft, die von der Stange 71 auf den Arm 51b in Abhängigkeit von dem verwendeten Filmmaterial sowie der Dicke des durchlaufenden Filmes übertragen wird, anzupassen.

Mit der erfindungsgemässen Einrichtung ist es somit möglich, vollständig auf eine aufwendige Handbetätigung zum Einstellen des Abstandes (a) zwischen den plattenförmigen sich drehenden Schweiss- und Schneideplatten zu verzichten.

Durch die vorstehende Erfindung kann der Abstand (a) bequem und rasch von einer Steuertafel aus eingestellt werden und, dank der Anzeigevorrichtung 66 kann dieser Einstellvorgang auch von einer fachlich nicht vorgebildeten Person vorgenommen werden, diese hat lediglich vorgegebenen Arbeitsanweisungen zu folgen.

Die Einstellvorgänge können in vorteilhafter Weise bei arbeitender Maschine durchgeführt werden, ohne die Funktion der Verpackungsanlage unterbrechen zu müssen.

## Patentansprüche

1. Schweiss- und Schneidevorrichtung für Filmverpackungen, bestehend aus zwei sich drehenden Wellen (10, 11), von denen jede mit radial abstehenden plattenförmigen Einrichtungen (6, 7; 8, 9) versehen ist, die an ihrem freien Ende Schweisseinrichtungen und Schneideeinrichtungen zum Durchtrennen des Verpackungsfilmes (3) aufweisen, **dadurch gekennzeichnet**, dass jedes Ende einer Welle (10), die plattenförmige Schweiss- und Schneideeinrichtungen (6, 7) aufnimmt, vom Arm (51a, 52a) eines Winkelhebels (51, 52) aufgenommen wird und dieser Winkelhebel (51, 52) um einen Lagerzapfen (53, 54), der mit dem Maschinengestell (55, 56) verbunden ist, verschwenkbar ist, und dass dem Ende des anderen Armes (51b, 52b) eines jeden Winkelhebels (51, 52) eine steuerbare Lageeinstellvorrichtung (60) sowie eine Reaktionsvorrichtung (71, 61) zugeordnet sind.

2. Schweiss- und Schneidevorrichtung, nach Patentanspruch 1, **dadurch gekennzeichnet**, dass die Lageeinstellvorrichtung (60) eine Antriebsschraube (61) aufweist, die über Kegelzahnräder (62, 63) mit einer Antriebswelle (64) wirkverbunden ist, dass die Antriebsschraube (61) einen verschiebbar angeordneten Steuerkörper (67) aufnimmt, der über eine geneigte Ebene (68) während seiner Verschiebebewegung eine Antriebsstange (59) betätigt, die auf den Arm (51b; 52b) des Winkelhebels (51; 52) einwirkt.

3. Schweiss- und Schneidevorrichtung, nach Patentanspruch 1, **dadurch gekennzeichnet**, dass die der Betätigungsstange (69) gegenüberliegende Seite des Armes (51b; 52b) von einer Kolben-Zylindereinheit (71, 62) als Reaktionsvorrichtung beeinflusst wird, in deren Leitung für die Zufuhr von Druckluft (P) eine Druckeinstellvorrichtung (72) eingesetzt ist.

4. Schweiss- und Schneidevorrichtung, nach Patentanspruch 1, **dadurch gekennzeichnet**, dass die Welle (64) zum Antrieb der Vorrichtung (60) mit einer Lageanzeigevorrichtung (66) wirkverbunden ist.

5. Schweiss- und Schneidvorrichtung nach Patentanspruch 1, **dadurch gekennzeichnet**, dass die Leitung zum Zuführen von Druckluft (P) zur Kolben-Zylindereinheit (71, 62) eine Druckregelvorrichtung (80) aufweist und dass der Arbeitsdruck des Druckmediums über ein Manometer (72) anzeigbar ist.

6. Schweiss- und Schneidevorrichtung, nach Patentanspruch 1, **dadurch gekennzeichnet**, dass eine Umschaltvorrichtung (100) vorgesehen ist, die auf automatischen Arbeitsablauf oder auf handbedienten Arbeitsablauf schaltbar ist und dass bei handbetätigtem Arbeitsablauf der Druck (P) aus der Kolben-Zylindereinheit (71, 61) entlüftet wird und sich eine grösstmögliche Öffnung (a) zwischen den plattenförmigen Schweiss- und Schneideinrichtungen einstellt.

7. Schweiss- und Schneidevorrichtung, nach Patentanspruch 1**, dadurch gekennzeichnet**, dass das Handrad (65) zum betätigen der Welle (64), die Lageanzeigevorrichtung (66), das Manometer (72) und die Druckregeleinrichtung (18) sowie der Schalter (100) auf einer zentralen Steuertafel angeordnet sind.

## Claims

1. Welding and cutting means for film packs, comprising two rotating shafts (10, 11), of which each is provided with radially projecting, plate-like arrangements (6, 7; 8, 9) which, at their free end, have welding devices and cutting devices for severing the packaging film (3), characterized in that each end of one shaft (10), which receives the plate-like welding and cutting devices (6, 7), is received by the arm (51a, 52a) of an angle lever (51, 52), and this angle lever (51, 52) can be pivoted around a bearing journal (53, 54), which is connected to the machine framework (55, 56), and in that the end of the other arm (51b, 52b) of each angle lever (51, 52) is assigned a controllable position-setting device (60) and a reaction device (71, 62).

2. Welding and cutting means according to Patent Claim 1, characterized in that the position-setting device (60) has a drive screw (61) which is operatively connected to a drive shaft (64) via conical gear wheels (62, 63), in that the drive screw (61) receives a displaceably arranged control body (67) which, during its displacement movement, actuates a drive rod (59) via an inclined plane (68), said drive rod acting on the arm (51b; 52b) of the angle lever (51; 52).

3. Welding and cutting means according to Patent Claim 1, characterized in that that side of the arm (51b; 52b) which is located opposite the actuating rod (59) is influenced by a piston/cylinder unit (71, 62), as reaction device, in whose line for the supply of compressed air (P) there is inserted a pressure-setting device (72).

4. Welding and cutting means according to Patent Claim 1, characterized in that the shaft (64) for driving the device (60) is operatively connected to a position-indicating device (66).

5. Welding and cutting means according to Patent Claim 1, characterized in that the line for supplying compressed air (P) to the piston/cylinder unit (71, 62) has a pressure-regulating device (80), and in that the operating pressure of the pressure medium can be indicated via a manometer (72).

6. Welding and cutting means according to Patent Claim 1, characterized in that there is provided a switchover device (100) which can be switched to automatic operation or to manual operation, and in that, in the case of manual operation, the pressure (P) is extracted from the piston/cylinder unit (71, 62) and the largest possible opening (a) is produced between the plate-like welding and cutting devices.

7. Welding and cutting means according to Patent Claim 1, characterized in that the hand wheel (65) for actuating the shaft (64), the position-indicating device (66), the manometer (72), the pressure-regulating device (80) and the switch (100) are arranged on a central control panel.

## Revendications

1. Dispositif de soudage et de coupe pour des emballages en feuille, constitué de deux arbres tournants 10, 11 dont chacun est pourvu d'installations en forme de plaque (6, 7, 8, 9) faisant saillie radialement qui présentent à leur extrémité libre des installations de soudage et des installations de coupe pour séparer la feuille d'emballage (3), caractérisé en ce que chaque extrémité d'un arbre (10) qui reçoit les dispositifs de soudage et de coupe en forme de plaque (6, 7) est reçue par le bras (51a, 52a) d'un levier coudé (51, 52) et que ce levier coudé (51, 52) peut pivoter autour d'un pivot (53, 54) qui est relié au châssis de machine (55, 56) et en ce que sont associés à l'extrémité de l'autre bras (51b, 52b) de chaque levier coudé (51, 52) un dispositif de réglage de position pouvant être commandé (60) ainsi qu'un dispositif de réaction (71,61).

2. Dispositif de soudage et de coupe selon la revendication 1, caractérisé en ce que le dispositif de réglage de position (60) présente une vis d'entraînement (61) qui est reliée activement par des roues dentées coniques (62, 63) à un arbre d'entraînement (64), en ce que la vis d'entraînement (61) reçoit un corps de commande (67) disposé de façon déplaçable qui actionne, sur un plan incliné (68), pendant son mouvement de déplacement, une tige d'entraînement (59) qui agit sur le bras (51b; 52b) du levier coudé (51; 52).

3. Dispositif de soudage et de coupe selon la revendication 1, caractérisé en ce que le côté du bras (51b; 52b) opposé à la tige d'actionnement (69) subit l'influence d'une unité à piston et à cylindre (71, 62) en tant que dispositif de réaction, dans le conduit duquel est placé un dispositif de réglage de la pression (72) pour l'amenée d'air comprimé (P).

4. Dispositif de soudage et de coupe selon la revendication 1, caractérisé en ce que l'arbre (64) est relié activement à un dispositif d'indication de la position (66) pour entraîner le dispositif (60).

5. Dispositif de soudage et de coupe selon la revendication 1, caractérisé en ce que le conduit pour l'amenée d'air comprimé (P) vers l'unité à piston et à cylindre (71, 62) présente un dispositif de réglage de la pression (80) et en ce que la pression de travail du milieu de pression peut être indiquée par un manomètre (72).

6. Dispositif de soudage et de coupe selon la revendication 1, caractérisé en ce qu'il est prévu un dispositif de commutation (100) qui peut être commuté à un fonctionnement automatique ou à un fonctionnement manuel, et en ce que lors d'un fonctionnement manuel la pression (P) de l'unité à piston et à cylindre (71, 61) est évacuée et en ce qu'il se produit l'ouverture la plus grande possible (A) entre les dispositifs de soudage et de coupe en forme de plaque.

7. Dispositif de soudage et de coupe selon la revendication 1, caractérisé en ce que la roue à main (65) pour actionner l'arbre (64), le dispositif d'indication de la position (66), le manomètre (72) et le dispositif de réglage de la pression (18) ainsi que le commutateur (100) sont disposés sur une table de commande centrale.
